# EUROPÄISCHE PATENTANMELDUNG

(11) **EP 3 434 917 A1**
(43) Veröffentlichungstag der Anmeldung: **30.01.2019**
(21) Anmeldenummer: 18182350.1
(22) Anmeldetag: 09.07.2018
(51) Int. Cl.: F16C 17/26, F16C 17/02, F16C 17/06, F16C 35/02

(54) **LAGERANORDNUNG ZUM LAGERN EINER WELLE EINES GETRIEBES**

(30) Priorität: 25.07.2017 DE 102017116786
(71) Anmelder: Zollern BHW Gleitlager GmbH & CO. KG, 38124 Braunschweig (DE)
(72) Erfinder: KOCH, Thilo, 37115 Duderstadt (DE); BERTRAM, Mathias, 37191 Katlenburg-Lindau (DE); GUST, Edgar, 38302 Wolfenbüttel (DE); Laabid, Abdelhakim, 37073 Göttingen (DE)
(74) Vertreter: Gramm, Lins & Partner Patent- und Rechtsanwälte PartGmbB

(57) **Zusammenfassung**

Die Erfindung betrifft eine Lageranordnung (1) zum Lagern einer Welle eines Getriebes, wobei die Lageranordnung mindestens zwei Radiallager und mindestens zwei Axiallager aufweist, wobei wenigstens eines der Radiallager ein Gleitlager ist und eine Lagerfläche aufweist, die durch wenigstens eine an einem Stützkörper (2) angeordnete Einlegeschale gebildet ist und wobei wenigstens eines der Axiallager, bevorzugt beide Axiallager ein Kippsegmentlager mit einer Mehrzahl von Kippsegmenten (10) ist.

## Beschreibung

Die Erfindung betrifft eine Lageranordnung zum Lagern einer Welle eines Getriebes. Die Erfindung betrifft zudem ein Getriebe für eine Windkraftanlage, das wenigstens eine Welle aufweist, die durch eine derartige Lageranordnung gelagert ist sowie eine Windkraftanlage mit einem derartigen Getriebe.

Windkraftanlagen sind in den letzten Jahren und Jahrzehnten in ihren Ausmessungen stetig gewachsen und werden heute vielfach an unzugänglichen oder nur schwer erreichbaren Orten, wie beispielsweise im Offshore-Bereich auf hoher See, eingesetzt. Dabei haben insbesondere Offshore-Windkraftanlagen den Vorteil, relativ konstanten Windverhältnissen ausgesetzt zu sein, wodurch die Stromausbeute besonders hoch wird. Zudem entfallen Beschwerden über Störungen von Anwohnern, so dass die Windkraftanlagen insbesondere bezüglich Größe und Anordnung optimal ausgelegt werden können. Heutige Windkraftanlagen haben eine Flügellänge von oftmals mehr als 60m, so dass insbesondere bei stärkeren und starken Winden immense Belastungen auf den Rotor der Windkraftanlage und damit auch auf die Welle, die durch den Rotor gedreht wird, wirken. Die Rotation der Welle wird über ein oftmals mehrstufiges Getriebe transformiert, bevor sie dem eigentlichen Generator zugeführt wird.

Insbesondere Getriebe für derartige Windkraftanlagen, aber auch Getriebe für andere Anwendungen, müssen eine Vielzahl von Voraussetzungen erfüllen. So müssen sie den enormen Belastungen, die durch den anstehenden Wind hervorgerufen werden können, standhalten und dennoch mit möglichst wenig Bauraum auskommen, da die Gondel, also das eigentliche Maschinenhaus der Windenergieanlage, möglichst klein ausgebildet sein sollte. Insbesondere im Offshore-Bereich ist es zudem wichtig, möglichst wartungsarme und fehlerunanfällige Getriebe bereitzustellen, da Wartung und Reparatur auf hoher See nur schwer und sehr kostenintensiv möglich ist.

Getriebe von Windenergieanlagen verfügen in der Regel über eine oder mehrere Planetengetriebestufen, so dass unterschiedliche Wellenformen in unterschiedlicher Weise gelagert werden müssen. Aus dem Stand der Technik ist bekannt, Wälzlager beispielsweise in Form von Pendelrollenlagern und Zylinderrollenlagern zu verwenden, die sich jedoch in der Praxis als nicht ausreichend fehlerunanfällig herausgestellt haben. Die Fehlerunanfälligkeit und Wartungsarmut des Lagers ist jedoch eine der kritischen Voraussetzungen, da, wie bereits dargelegt, Wartung nur schwer möglich ist und ein Ausfall eines der Planetenlager einer Windenergieanlage in der Regel zum Totalausfall der Anlage führt. Ein derartiger Ausfall ist selbstverständlich möglichst zu vermeiden.

Insbesondere bei Planetengetrieben kommt als zusätzliche Herausforderung dazu, dass die einzelnen Wellen nicht nur in einem Radiallager gelagert werden müssen, sondern gegebenenfalls auch gegen eine Bewegung in axialer Richtung durch ein Axiallager gesichert werden müssen.

Der Erfindung liegt die Aufgabe zugrunde, eine Lageranordnung zum Lagern einer Welle eines Getriebes vorzuschlagen, das platzsparend und dennoch fehlerunanfällig und damit wartungsarm ist und dennoch optimale Lagereigenschaften aufweist.

Die Erfindung löst die gestellte Aufgabe mit einer Lageranordnung zum Lagern einer Welle eines Getriebes, wobei das Lager wenigstens zwei Radiallager und wenigstens zwei Axiallager aufweist, wobei wenigstens eines der Radiallager ein Gleitlager ist und eine Lagerfläche aufweist, die durch wenigstens eine an einem Stützkörper angeordnete Einlegeschale gebildet ist, und wobei wenigstens eines der Axiallager, bevorzugt beide Axiallager ein Kippsegmentlager mit einer Mehrzahl von Kippsegmenten ist.

Die Verwendung eines Gleitlagers als Radiallager bietet eine sehr zuverlässige und fehlerunanfällige Art eines Radiallagers. Der Stützkörper, der vorteilhafterweise aus Stahl besteht und einstückig oder mehrstückig ausgebildet sein kann, verfügt über eine Axialöffnung, durch die die zu lagernde Welle geführt wird. Diese Öffnung ist mit der wenigstens einen Einlegeschale ausgekleidet, die beispielsweise in den Stützkörper eingepresst sein kann. Die Einlegeschale kann ebenfalls mehrteilig ausgebildet sein und erstreckt sich vorteilhafterweise über den gesamten Umfang der Öffnung im Stützkörper.

Die beiden Radiallager sind vorteilhafterweise entlang der Längsrichtung der Welle, die zu lagern ist, voneinander beabstandet. Auf diese Weise kann eine sichere Lagerung in radialer Richtung gewährleistet werden. Die beiden Axiallager sind vorteilhafterweise ausgebildet, die Welle in zwei einander entgegengesetzten axialen Richtungen zu lagern. So ist eines der Axiallager vorzugsweise eingerichtet, Kräfte in eine erste axiale Richtung, beispielsweise nach rechts, aufzunehmen, während das andere der beiden Axiallager eingerichtet ist, Kräfte in die entgegengesetzte axiale Richtung, vorliegend also nach links, aufzunehmen. Auf diese Weise wird eine umfassende Lagerung erreicht.

Vorteilhafterweise sind die Kippsegmente wenigstens eines der Axiallager an einem der Stützkörper eines der Radiallager angeordnet. Auf diese Weise wird ein Lager gebildet, das sowohl wenigstens eines der Axiallager als auch eines der Radiallager aufweist. Ein derartiges Lager ist für verschiedenste Anwendungen einsetzbar und stellt eine separate Erfindung dar. In einer bevorzugten Ausgestaltung verfügt ein derartiges Lager über eines der beiden Radiallager und an den beiden Stirnseiten des entsprechendes Stützkörpers über Axiallagerelemente, insbesondere Kippsegmente, um die axiale Lagerung gewährleisten zu können.

Ein solches Lager, das ein Radiallager und mindestens ein Axiallager, bevorzugt beide Axiallager aufweist, kann mit allen hier beschriebenen Ausgestaltungen ausgerüstet werden.

Vorteilhafterweise verfügt die Einlegeschale über wenigstens zwei Schichten oder Lagen, von denen die eine, der sogenannte Rücken, die der Öffnung abgewandte Seite ist. Sie ist mit dem Stützkörper vorzugsweise lösbar verbunden und besteht vorteilhafterweise ebenfalls aus einem Stahl. Die radial innere Schicht der Einlegeschale ist die sogenannte Laufschicht, die die eigentliche Lagermetallschicht darstellt. Sie besteht vorzugsweise aus einem Gleitlagermetall, beispielsweise Weißmetall, Bronze, einem Kunststoff, Aluminium oder einer Aluminiumlegierung, insbesondere einer Aluminium-Zinn-Legierung, bespielsweise AISn20 oder AlSn40.

Ein derartiges Radiallager verfügt über keine beweglichen Teile, so dass der Verschleiß und damit die Wartungsintensität sehr gering ist.

Zusätzlich verfügt die Lageranordnung über wenigstens ein Axiallager, vorzugsweise zwei Axiallager, das ein Kippsegmentlager mit einer Mehrzahl von Kippsegmenten ist. Eine Mehrzahl sind dabei insbesondere mindestens zwei Kippsegmente.

Um zu verhindern, dass sich die Welle in axialer Richtung bewegen kann, sind die wenigstens zwei Axiallager vorgesehen. Insbesondere bei der Welle, die mit dem Rotor einer Windkraftanlage verbunden ist, jedoch auch bei anderen in einem Getriebe verwendeten Wellen kann es im Betrieb des Lagers, der Welle und/oder des Getriebes durchaus zu nennenswerten Kräften entlang der Axialrichtung der Welle kommen. Diese müssen nicht immer homogen über den Querschnitt der Welle verteilt sein, sondern können durchaus unterschiedliche Größen an unterschiedlichen Stellen aufweisen. Insbesondere können Sie von der Rotationsgeschwindigkeit der Welle und dem Betriebsmodus beispielsweise des Getriebes, abhängen. Das wenigstens eine Axiallager, vorzugsweise beide Axiallager, verfügt daher über eine Mehrzahl von Kippsegmentlagern, die in einer speziellen Halterung gelagert sind, und um wenigstens eine Achse, bevorzugt gegenüber einem Auflagepunkt, kippbar sind. Sie werden durch die rotierende Welle selbst in die optimale Position gekippt, so dass in jeder Situation eine optimale Lagerung möglich ist. Die Segmente sind, wie bereits dargelegt, jeweils kippbeweglich, um zu gewährleisten, dass sie sich an den Betriebszustand optimal einstellen, der insbesondere von der Drehzahl und der anliegenden Last an der Welle abhängt. Es hat sich gezeigt, dass Kippsegmente belastbarer als sogenannte Mehrflächenlager sind. Die einzelnen Kippsegmente werden mit einem Schmiermittel, insbesondere einem Öl, versorgt, um die Reibung zu minimieren. Dazu sind Ölzuführungskanäle vorzugsweise vorhanden, die frisches Öl zuführen. Vorteilhafterweise ist für jedes Kippsegment wenigstens ein Ölzuführungskanal vorhanden. Zusätzlich können die einzelnen Kippsegment auch über einen Seitenfluss des Öls aus dem Radiallager versorgt werden.

Die Einlegeschale der wenigstens zwei Radiallager wird in der Regel aus einem Verbundkörper hergestellt. Dazu kann das Gleitlagermetall, beispielsweise das Weißmetall oder die Aluminiumlegierung, direkt auf den Stützkörper oder auf die Innenseite der Einlegeschale aufgebracht oder beispielsweise zentrifugal geschleudert werden. Die erfindungsgemäße Ausgestaltung des Lagers hat jedoch den Vorteil, auch andere Lagermetalle, beispielsweise Bronzelegierungen oder sogar Kunststoffe, mit an sich bekannten Fertigungsverfahren zu verwenden, indem die Einlegeschale in den Stützkörper integriert wird. Dies kann beispielsweise durch Press- oder Schrumpfverfahren geschehen, so dass ein Press- oder Schrumpfverband entsteht.

Vorteilhafterweise sind die Kippsegmente in Umfangsrichtung bezüglich der zu lagernden Welle zumindest abschnittsweise, vorzugsweise aber über den gesamten Umfang, äquidistant an einer axialen Stirnfläche des Stützkörpers angeordnet. Die äquidistante oder zumindest abschnittsweise äquidistante Positionierung der Kippsegmente führt zu einer optimalen Verteilung über den Umfang und somit zu einer möglichst homogenen Druckverteilung durch die Welle auf die einzelnen Kippsegmente. Insbesondere für den Fall, dass der Stützkörper aus mehreren Stützkörperanteilen besteht, die bei der Montage des Lagers zu einem Stützkörper zusammengesetzt und miteinander verbunden werden, kann es jedoch auch von Vorteil sein, nur an den Teilen der Stirnfläche, die von jeweils einem der Stützkörperanteile gebildet wird, eine äquidistante Verteilung der Kippsegmente vorzusehen.

Alternativ dazu können die einzelnen Kippsegmente auch nicht äquidistant angeordnet sein. Auch dies ist in gewissen Situationen von Vorteil. Die Kippsegmente bilden das Axiallager und sind somit dafür vorgesehen, in axialer Richtung wirkende Kräfte aufzunehmen. Im Betrieb können diese Kräfte jedoch schwanken und dabei nicht nur ihre Stärke und ihre Richtung ändern, so dass es zu einer Schubumkehr kommt, sondern auch in unterschiedlichen Abständen von der Rotationsachse der Welle auftreten. So ist es beispielsweise möglich, dass große axiale Druckkräfte in bestimmten Situationen auftreten, dann jedoch immer in einem vorbestimmten Bereich, beispielsweise unterhalb der Rotationsachse. In anderen Situationen treten axiale Druckkräfte in deutlich kleinerer Stärke auf, liegen jedoch oberhalb der Rotationsachse. In dieser Situation ist es von Vorteil, unterhalb der Rotationsachse, also in dem Bereich, in dem große Schub-und Druckkräfte auftreten, mehr Kippsegmente vorzusehen, als im Bereich oberhalb der Rotationsachse, also in dem Bereich, indem Schubkräfte zwar auftreten, jedoch eine deutlich geringere Stärke aufweisen. Zudem kann es vorkommen, dass die zu lagernde Welle verkantet, so dass auch auf diese Weise ungleich verteilte Kräfte von wenigstens einem der Axiallager aufgenommen werden müssen.

Vorteilhafterweise ist der Stützkörper an einer Stirnfläche geschlossen, wobei die Mehrzahl von Kippsegmenten an dieser Stirnfläche angeordnet ist. Das Lager ist dann topfförmig ausgebildet und die zu lagernde Welle wird in dieses Lager hineingeschoben. In diesem Fall sind die Kippsegmente des Axiallagers radial innen vom Radiallager angeordnet. Ist die Lageranordnung an keiner der Stirnflächen geschlossen und die zu lagernde Welle vollständig durch die Lageranordnung hindurchgeführt, ist dies naturgemäß nicht möglich, so dass die Kippsegmente radial außen von der Lagerfläche des Radiallagers angeordnet sind.

In einer bevorzugten Ausgestaltung ist die wenigstens eine Einlegeschale lösbar an dem Stützkörper angeordnet. Dies ermöglicht einen leichten Austausch der Einlegeschale, wenn dies beispielsweise durch Verschleiß oder Abrieb oder zu Wartungszwecken nötig sein sollte. Besonders bevorzugt verfügt das Lager über wenigstens zwei in axialer Richtung voneinander beabstandete Radiallager. Besonders bevorzugt verfügt das Lager über zwei Axiallager, die vorzugsweise an zwei einander gegenüberliegenden Stirnseiten des Stützkörpers angeordnet sind. Selbstverständlich kann die Lageranordnung auch zum Lagern mehrerer Wellen verwendet werden, wobei beispielsweise wenigstens eine Welle durch das Radiallager in radialer Richtung und wenigstens eine andere Welle durch das Axiallager in axialer Richtung gelagert wird. Vorzugsweise verfügen die Lager jedoch über mehrere Radiallager und mehrere Axiallager, um möglichst alle Wellen des Getriebes lagern zu können. Auf diese Weise ist eine besonders hohe Stabilität und Verformungsunanfälligkeit gewährleistet.

Vorzugsweise befindet sich zwischen dem Stützkörper und wenigstens einem der Kippsegmente, vorzugsweise jedoch aller Kippsegmente, ein Ölleitring.

Die Erfindung löst die gestellte Aufgabe zudem durch ein Getriebe für eine Windkraftanlage, das wenigstens eine Stirnradgetriebestufe mit wenigstens einer Welle aufweist, die durch eine Lageranordnung, vorzugsweise mindestens zwei Lageranordnungen, gemäß einem der vorstehenden Ansprüche gelagert ist. Als besonders vorteilhaft hat sich herausgestellt, wenn mehrere, bevorzugt alle Wellen der Stirnradstufe durch die Lageranordnung nach einem der vorstehenden Ansprüche gelagert sind.

Zudem löst die Erfindung die gestellte Aufgabe durch eine Windkraftanlage mit einem Getriebe der hier beschriebenen Art.

Mit Hilfe der Zeichnung werden nachfolgend einige Ausführungsbeispiele der vorliegenden Erfindung näher erläutert. Es zeigt:
- Figur 1: - die schematische Darstellung eines Lagers in axialer Richtung,
- Figur 2: - eine Schnittdarstellung durch das in Figur 1 gezeigte Lager und
- Figur 3: - eine schematische 3D-Ansicht des Lagers aus den Figuren 1 und 2,
- Figur 4: - die schematische Schnittdarstellung durch ein Lager gemäß einem weiteren Ausführungsbeispiel der vorliegenden Erfindung,
- Figur 5: - die schematische dreidimensionale Ansicht des Lagers aus Figur 4 und
- Figur 6: - die schematische Darstellung eines Lagers gemäß einem weiteren Ausführungsbeispiel der vorliegenden Erfindung und
- Figur 7: - die schematische Schnittdarstellung durch ein Getriebe, bei dem La-ger gemäß Ausführungsbeispiel in der vorliegenden Erfindung verwendet werden.

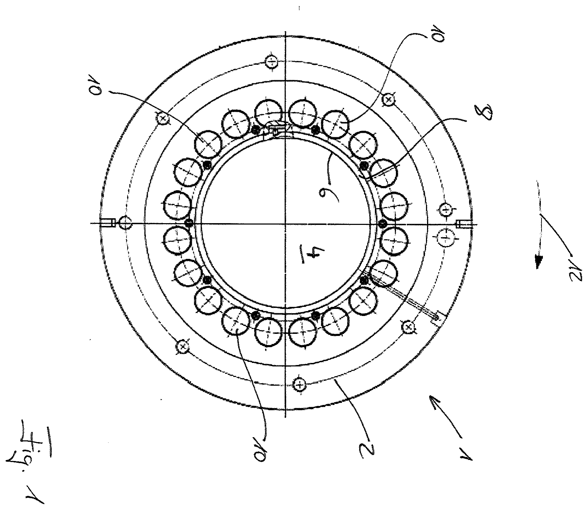

Figur 1 zeigt ein Lager, das als Teil einer Lageranordnung 1 gemäß einem ersten Ausführungsbeispiel der vorliegenden Erfindung verwendet werden kann. Es verfügt über einen Stützkörper 2, der über eine zentrale Öffnung 4 verfügt, durch die eine Welle, die nicht dargestellt ist, hindurchgeführt werden kann. Die zentrale Öffnung 4 wird umgeben von einer Lagerfläche 6, die eine radial innere Fläche einer Einlegeschale 8 bildet. Im gezeigten Ausführungsbeispiel ist die Einlegeschale aus zwei Stücken ausgebildet. Alternativ dazu sind jedoch auch einstückige und mehrstückige Einlegeschalen 8 und/oder mehrstückige Stützkörper 2 denkbar.

Um die zentrale Öffnung 4 herum sind eine Mehrzahl von Kippsegmenten 10 dargestellt, die die Lagerfläche des Lagers bilden. Sie sind im gezeigten Ausführungsbeispiel äquidistant über den Umfang verteilt und sorgen so für eine optimale Lastaufnahme einer zu lagernden Welle. Im Betrieb wird eine Welle, die durch die zentrale Öffnung 4 geführt ist, entlang der Pfeilrichtung des Pfeiles 12 rotieren.

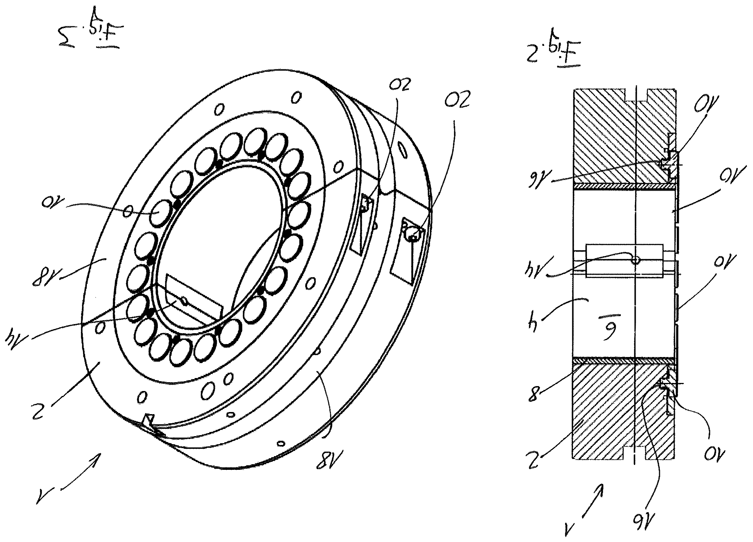

Figur 2 zeigt eine schematische Schnittdarstellung durch das Lager aus Figur 1. Der Stützkörper sowie die zentrale Öffnung 4 sind gut zu erkennen. In der Lagerfläche 6 der Einlegeschale 8 ist eine Ölzuführung 14 dargestellt, durch die die Lagerfläche 6 und damit das Axiallager geschmiert wird. Alternativ ist es auch möglich, mehrere Ölzuführungen 14 zu verwenden, insbesondere um Öl in verschiedene Lager, beispielsweise in ein Radiallager und in ein Axiallager zu führen. Man erkennt mehrere Kippsegmente 10, von denen zwei im Querschnitt dargestellt sind. Sie sind um einen Auflagepunkt 16 herum in nahezu alle Richtungen schwenkbar ausgebildet. Der Auflagepunkt 16 muss selbstverständlich kein Punkt im mathematischen Sinne sein, sondern kann als Fläche, die auch gebogen, gewölbt oder eben ausgebildet sein kann, vorhanden sein.

Figur 3 zeigt das Lager in einer leicht abgewandelten Ausführungsform. Man erkennt, dass der Stützkörper 2 zwei Stützkörperelemente 18 aufweist, die jeweils halbkreisförmig ausgebildet sind. Sie sind über Befestigungsmittel 20 aneinander festgelegt. Man erkennt zudem die Ölzuführung 14 sowie die einzelnen Kippsegmente 10.

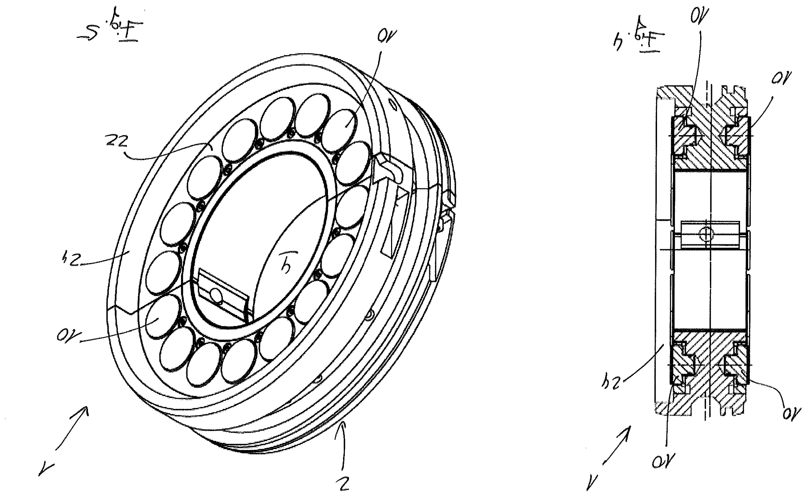

Die Figur 4 und 5 zeigen eine weitere Ausführungsform des Lagers. Radial außen von den Kippsegmenten 10, die wieder in einer Stirnfläche 22 des Stützkörpers 2 angeordnet sind, ist ein umlaufender Rand 24 angeordnet, der in axialer Richtung bezüglich der zentralen Achse der zentralen Öffnung 4 über die Kippsegmente 10 hervorsteht. Dieser ist auch in Figur 4, die eine Schnittdarstellung durch das Lager 1 aus Figur 5 zeigt, dargestellt. In der Schnittdarstellung der Figur 4 ist zu erkennen, dass das Lager zwei Axiallager aufweist, die jeweils eine Mehrzahl von Kippsegmenten 10 aufweisen. Das eine Axiallager, das auch in Figur 5 dargestellt ist, wird aus den in Figur 4 rechts dargestellten Kippsegmenten 10 gebildet. Diese sind gegenüber dem umlaufenden Rand 24 in axialer Richtung zurückspringend. Der Rand 24 dient der Einleitung axial wirkender Kräfte in einen anschließenden Lagerkörper, der nicht dargestellt ist. In Figur 4 nach links ausgerichtete Kippsegmente 10, springen nicht hinter einem Rand zurück, sondern sind, wie in Figur 1 bis 3 dargestellt, in der Stirnfläche 22 angeordnet. Eine axiale Lagerung eines an dieser Stelle radial gelagerten Elementes findet nicht statt.

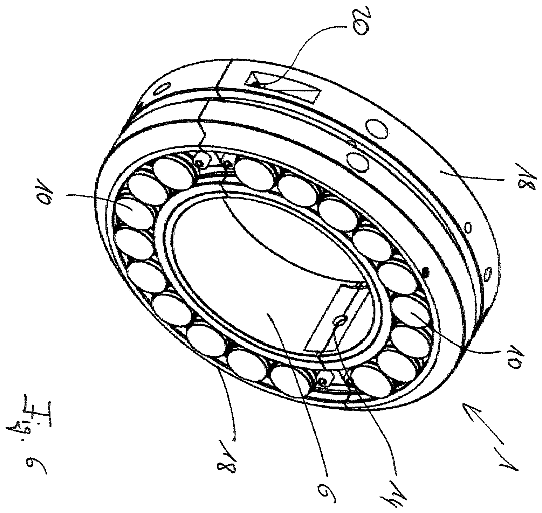

Figur 6 zeigt eine weitere Ausgestaltung des Lagers, die über zwei Stützkörperelemente 18 verfügt, die über Befestigungsmittel 20 aneinander festgelegt sind. Auch hier erkennt man die Lagerfläche 6, die Ölzuführung 14 sowie die verschiedenen Kippsegmente 10. Anders als bei den bisher gezeigten Ausführungsformen sind die Kippsegmente 10 jedoch nicht über den vollständigen Umfang äquidistant verteilt. An zwei Stellen, an denen die beiden Stützkörperelemente 18 aneinander anliegen, fehlen entsprechende Kippsegmente 10, so dass hier ein Bruch der ansonsten äquidistanten Verteilung vorliegt.

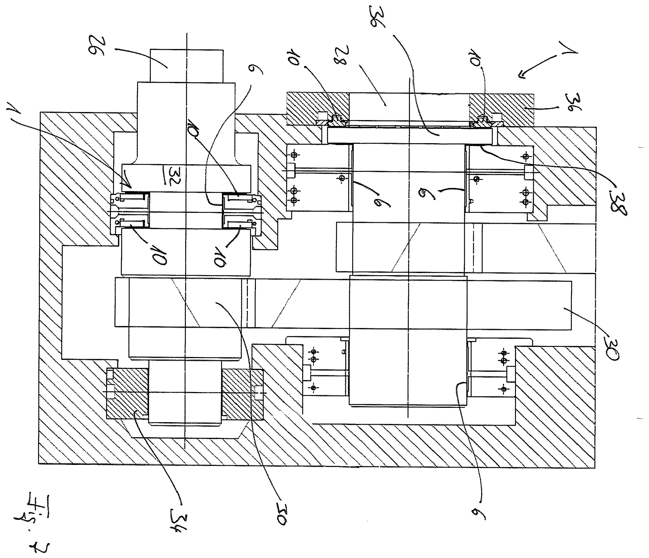

Figur 7 zeigt einen Schnitt durch ein Getriebe. Das über eine erste Welle 26 und eine zweite Welle 28, auf der jeweils ein Zahnrad 30 angeordnet ist, die miteinander in Eingriff stehen. Zwei Lageranordnungen 1 werden verwendet. Die erste Welle 26 wird über eine Lageranordnung 1 gelagert, bei der ein Lager gemäß einem Ausführungsbeispiel der vorliegenden Erfindung gelagert, das über die Lagerfläche 6 des Radiallagers und die Kippsegmente 10 der Axiallager verfügt. Man erkennt, dass an der ersten Welle 26 ein Flansch 32 angeordnet ist, der über die eigentliche erste Welle 26 in radialer Richtung hinaussteht und so an den Kippsegmenten 10 des Lagers 1 anliegt. Da auch auf der gegenüberliegenden Seite des Lagers ein derartiger Flansch angeordnet ist, verfügt das Lager auf beiden Seiten in axialer Richtung über entsprechende Kippsegmente 10. Im rechten Bereich der Figur 7 ist die erste Welle 26 durch ein weiteres Radiallager 34 gelagert, so dass insgesamt zwei Radiallager und zwei Axiallager vorhanden sind, um die erste Welle 26 zu lagern.

Dies ist bei der Lageranordnung 1, durch das die zweite Welle 28 gelagert wird, anders. Auch diese Lageranordnung verfügt selbstverständlich über Lagerflächen 6 zur radialen Lagerung. Einer der entsprechenden Lagerkörper verfügt über ein Mehrflächenlager 38, welches eines der beiden Axiallager bildet. Das zweite Axiallager ist als separates Axiallager 36 ausgebildet und verfügtüber Kippsegmente 10, durch die axial auftretende Kräfte abgefangen und gelagert werden können.

### Bezugszeichenliste

- 1: Lageranordnung
- 2: Stützkörper
- 4: zentrale Öffnung
- 6: Lagerfläche
- 8: Einlegeschale
- 10: Kippsegment
- 12: Pfeil
- 14: Ölzuführung
- 16: Auflagepunkt
- 18: Stützkörperelement
- 20: Befestigungsmittel
- 22: Stirnfläche
- 24: Rand
- 26: erste Welle
- 28: zweite Welle
- 30: Zahnrad
- 32: Flansch
- 34: Radiallager
- 36: Axiallager
- 38: Mehrflächenlager

## Patentansprüche

1. Lageranordnung (1) zum Lagern einer Welle eines Getriebes, wobei die Lageranordnung
mindestens zwei Radiallager und mindestens zwei Axiallager aufweist,
wobei wenigstens eines der Radiallager ein Gleitlager ist und eine Lagerfläche (6) aufweist, die durch wenigstens eine an einem Stützkörper (2) angeordnete Einlegeschale (8) gebildet ist und
wobei wenigstens eines der Axiallager, bevorzugt beide Axiallager ein Kippsegmentlager mit einer Mehrzahl von Kippsegmenten (10) ist.

2. Lageranordnung (1) nach Anspruch 1, **dadurch gekennzeichnet, dass** die Kippsegmente (10) wenigstens eines der Axiallager an einem Stützkörper eines der Radiallager angeordnet sind.

3. Lageranordnung (1) nach Anspruch 1 oder 2, **dadurch gekennzeichnet, dass** die Kippsegmente (10) in Umfangsrichtung bezüglich der zu lagernden Welle zumindest abschnittsweise, vorzugsweise über den gesamten Umfang äquidistant, vorteilhafterweise an einer axialen Stirnfläche (22) des Stützkörpers (2), angeordnet sind.

4. Lageranordnung (1) nach einem der vorstehenden Ansprüche, **dadurch gekennzeichnet, dass** der Stützkörper (2) an einer Stirnfläche geschlossen ist, an der die Mehrzahl von Kippsegmenten (10) angeordnet ist.

5. Lageranordnung (1) nach einem der vorstehenden Ansprüche, **dadurch gekennzeichnet, dass** die Lagerfläche aus einem Weißmetall, einer Bronze, einem Kunststoff, Aluminium oder einer Aluminiumlegierung, insbesondere einer Aluminium-Zinn-Legierung hergestellt ist.

6. Lageranordnung (1) nach einem der vorstehenden Ansprüche, **dadurch gekennzeichnet, dass** die wenigstens eine Einlegeschale (8) lösbar an dem Stützkörper (2) angeordnet ist.

7. Lageranordnung (1) nach einem der vorstehenden Ansprüche, **dadurch gekennzeichnet, dass** das Lager (1) wenigstens zwei in axialer Richtung voneinander beabstandete Radiallager aufweist.

8. Lageranordnung (1) nach einem der vorstehenden Ansprüche, **dadurch gekennzeichnet, dass** das Lager (1) zwei Axiallager aufweist, die vorzugsweise an zwei einander gegenüberliegenden Stirnseiten (22) des Stützkörpers (2) angeordnet sind.

9. Lageranordnung (1) nach einem der vorstehenden Ansprüche, **dadurch gekennzeichnet, dass** sich zwischen dem Stützkörper (2) und wenigstens eines der Kippsegmente (10), vorzugsweise aller Kippsegmente (10) ein Futterring befindet.

10. Getriebe für eine Windkraftanlage, das wenigstens eine Stirnradgetriebestufe mit wenigstens eine Welle aufweist, die durch eine Lageranordnung (1), vorzugsweise mindestens zwei Lageranordnungen (1) gemäß einem der vorstehenden Ansprüche gelagert ist.

11. Getriebe nach Anspruch 10, **dadurch gekennzeichnet, dass** mehrere, bevorzugt alle Wellen der Stirnradstufe durch wenigstens eine Lageranordnung (1) nach einem der Ansprüche 1 bis 6 gelagert sind.

12. Windkraftanlage mit einem Getriebe nach einem der Ansprüche 10 oder 11.
